# EUROPÄISCHE PATENTANMELDUNG

(11) **EP 1 655 209 A1**
(43) Veröffentlichungstag der Anmeldung: **10.05.2006**
(21) Anmeldenummer: 04026258.6
(22) Anmeldetag: 05.11.2004
(51) Int. Cl.: B62D 25/14

(54) **Instrumententafelträger**

(71) Anmelder: Alcan Technology & Management Ltd., 8212 Neuhausen am Rheinfall (CH)
(72) Erfinder: Hein,Jörg, 78256 Steisslingen (DE); Gallasch, Olaf, 78224 Singen (DE); Grbavac, Ivan, 78333 Stockach (DE); Zeller, Kuno, 78176 Blumberg (DE)

(57) **Zusammenfassung**

Die Erfindung betrifft ein Instrumententafelträger (1) eines Kraftfahrzeuges, enthaltend ein durchgehendes, an die beiden seitlichen Karosseriestrukturen angebundenes, zentrales Profil, eine zum Fahrzeugboden geführte Stützstrebe und eine fahrerseitige Verstärkungsstruktur. Die Erfindung zeichnet sich dadurch aus, dass der Instrumententafelträger (1) ein Strangpresshohlprofil mit einem ersten (2) und zweiten (3) Teilprofil enthält, und das erste Teilprofil (2) dem zentralen Profil und das zweite Teilprofil (3) der Verstärkungsstruktur entspricht, und das zweite Teilprofil (3) zwecks Ausbildung der Stützstrebe (3a), beifahrerseitig in Profillängsrichtung vom ersten Teilprofil (2) abgetrennt und aus dem Richtungsverlauf des ersten Teilprofils (2) weggebogen ist.

## Beschreibung

Vorliegende Erfindung betrifft einen Instrumententafelträger eines Kraftfahrzeuges, enthaltend ein durchgehendes, an die beiden seitlichen Karosseriestrukturen angebundenes, zentrales Profil, eine zum Fahrzeugboden geführte Stützstrebe und eine fahrerseitige Verstärkungsstruktur, sowie die Herstellung eines solchen Instrumententafelträgers.

Instrumententafelträger werden in der Automobilindustrie im Karosseriebau verwendet. Als Teil einer Kraftfahrzeugkarosserie ist der Instrumententafelträger zwischen den sogenannten A-Säulen, den ersten Säulen in der Seitenwand des Fahrzeuges, die zur Aufnahme einer Vordertüre dienen, mit der Karosserie des Fahrzeuges verbunden. Der Instrumententafelträger ist im Bereich unterhalb der Windschutzscheibe etwa horizontal verlaufend angeordnet.

Der Instrumententafelträger dient zur Befestigung der Instrumententafel, wobei dem Instrumententafelträger ausserdem die Aufgabe zukommt, die Instrumententafel auszusteifen. An dem Instrumententafelträger sind daher Halterungen vorgesehen, an denen die Instrumententafel, ferner eventuell eine Mittelkonsole und die Lenkeinrichtung befestigt werden.

Der Instrumententafelträger ist zwecks Aussteifung der Querträgerstruktur in der Regel gegen den Fahrzeugboden, insbesondere gegen den sogenannten Mitteltunnel hin, zusätzlich abgestützt.

Die Hauptkräfte, wie die Abstützkraft an der Lenkung durch den Fahrer sowie die Gewichtskraft durch die Instrumententafel und die Lenkeinrichtung, werden hauptsächlich im Bereich der Fahrerseite auf den Instrumententafelträger übertragen, während die Belastungen des Instrumententafelträger auf der Beifahrerseite geringer sind. Die Instrumententafelträger werden daher üblicherweise mit einem über ihre Längserstreckung ändernden Profilquerschnitt hergestellt, wobei der Profilabschnitt auf der Fahrerseite in der Regel einen grösseren Querschnitt aufweist, d.h. verstärkt ist, als der Profilabschnitt auf der Beifahrerseite.

Durch eine derartige Querschnitts- bzw. Durchmesseränderung kann der Instrumententafelträger auf die lokal auf einen Profilabschnitt einwirkenden Kräfte ausgelegt werden, indem dieser nur an den notwendigen Abschnitten mit einem grösseren bzw. versteifenden Querschnitt verstärkt ist. Diese Konstruktionsweise trägt wesentlich zur Gewichtsoptimierung der gesamten Struktur bei.

Ein weiterer Grund dafür, dass solche Querträger mit nicht konstantem Querschnitt hergestellt werden, liegt darin, dass die Platzverhältnisse in der Instrumententafel in der Regel beengt sind und der Querschnitt daher, wo immer möglich, klein gehalten werden soll.

Es sind Mehrkomponenten-Lösungen bekannt, bei welchen die Instrumententafelträger aus mehreren Teilen, wie Strangpressteilen, Guss- und/oder Blechteilen gefügt sind. Mehrkomponenten-Lösungen weisen jedoch den Nachteil auf, dass die Herstellung der aus vielen Einzelteilen gefertigten Instrumententafelträger aufwendig ist und solche Träger überdies eine Vielzahl von Fügestellen aufweisen, welche potentielle Schwachstellen ausbilden. Ferner steht eine solche Mehrkomponenten-Lösung dem allgemeinen Bestreben nach einer Teile-Reduktion im Automobilbau entgegen.

Die US 2004/0178652 beschreibt einen Instrumententafelträger eines Kraftfahrzeuges, welcher aus wenigen Einzelteilen gefertigt ist. Dieser enthält ein durchgehendes Trägerrohrprofil, an welches fahrerseitig ein parallel zu diesem verlaufendes Verstärkungsrohrprofil angebunden ist. Das Verstärkungsrohrprofil ist im Bereich der Mittelkonsole unter Ausbildung einer Stützstrebe zum Fahrzeugboden hin weggebogen. Die beiden Rohrprofile sind fahrerseitig unter Ausbildung einer Berührungslinie miteinander verschweisst.

Das Verschweissen von Rohrprofilen entlang eines Spaltüberganges ist fügetechnisch äusserst problematisch und führt zu strukturellen Mängeln im Instrumententafelträger. So findet der Kraftübertrag zwischen den Profilen im wesentlichen im Bereich der Schweissnähte statt, so dass diese dynamisch stark beansprucht werden, was zu einem Versagen der Verbindung führen kann.

Um eine optimale Verstärkung des Trägerprofils durch das Verstärkungsprofil zu erreichen, ist daher eine gut konzipierte Anbindung des Verstärkungsprofils an das Trägerprofil hinsichtlich einer idealen Kraftübertragung unerlässlich. Die Ausbildung einer solchen Anbindung soll jedoch nicht zu Lasten eines optimierten Profilquerschnittes im Verstärkungsprofil oder Trägerprofil gehen.

Der Erfindung liegt deshalb die Aufgabe zugrunde, eine Instrumententafelträgerstruktur vorzuschlagen, welche aus möglichst wenigen Einzelteilen besteht und den über die Längserstreckung unterschiedlichen Belastungen Rechnung trägt, biegesteif sowie kostengünstig und mit geringem Zeitaufwand herstellbar ist.

Erfindungsgemäss wird die Aufgabe dadurch gelöst, dass der Instrumententafelträger ein Strangpressprofil mit einem ersten und zweiten Teilprofil enthält, und das erste Teilprofil dem zentralen Profil und das zweite Teilprofil der Verstärkungsstruktur entspricht, und das zweite Teilprofil zwecks Ausbildung einer Stützstrebe, beifahrerseitig in Profillängsrichtung vom ersten Teilprofil abgetrennt und aus dem Richtungsverlauf des ersten Teilprofils weggebogen ist.

Das zentrale Profil ist bevorzugt durchgehend (einstückig) von der linken zur rechten Karosserieanbindung ausgebildet. Das zentrale Profil kann in Längsrichtung auch mehrteilig ausgebildet sein.

Das Strangpressprofil ist bevorzugt ein Ein-, Zwei-, Drei- oder Mehrkammerhohlprofil, wobei vorzugsweise wenigstens das erste Teilprofil wenigstens eine Hohlkammer aufweist. Ferner weist auch des zweite Teilprofil bevorzugt wenigstens eine Hohlkammer auf.

Das weggebogene, zweite Teilprofil ist in Funktion als Tunnelstütze bevorzugt zum Fahrzeug-Mitteltunnel geführt. Das zweite Teilprofil enthält an seinem freien Endabschnitt zum Fahrzeugboden hin Mittel, wie Ausnehmungen, zur Anbindung an die Fahrzeugstruktur. Das zweite Teilprofil ist am genannten Endabschnitt bevorzugt zu einem Flachprofil gequetscht. Ferner können zwecks Anbindung an die Fahrzeugstruktur am besagten Endabschnitt auch Profilwände entfernt sein.

In einer Weiterentwicklung der Erfindung enthält der Instrumententafelträger fahrerseitig wenigstens zwei Profilkammern, insbesondere geschlossene Profilkammern. Das erste und zweite Teilprofil, welche fahrerseitig bevorzugt parallel verlaufen, enthalten bevorzugt jeweils ebenfalls wenigstens eine Profilkammer, insbesondere eine geschlossene Profilkammer.

In einer spezifischen Ausführung der Erfindung enthält der Instrumententafelträger ein erstes und ein zweites, jeweils wenigstens eine Profilkammer, insbesondere eine geschlossene Profilkammer, ausbildendes Teilprofil. Die beiden Teilprofile sind fahrerseitig über wenigstens einen, vorzugsweise zwei Verbindungsstege verbunden, wobei das zweite Teilprofil im beifahrerseitigen Profilabschnitt im Bereich der Verbindungsstege in Profillängsrichtung vom ersten Teilprofil abgetrennt und aus dem Richtungsverlauf des ersten Teilprofils weggebogen ist.

Das erste und zweite Teilprofil sind fahrerseitig besonders bevorzugt über wenigstens zwei Verbindungsstege verbunden, wobei das erste und zweite Teilprofil zusammen mit den Verbindungsstegen wenigstens eine weitere, dritte Profilkammer einschliessen. Die Verbindungsstege fluchten bevorzugt mit der zugeordneten Profilwand des ersten und zweiten Teilprofils.

Die Ausbildung einer dritten Profilkammer dient einerseits der Schaffung eines genügend grossen Toleranzbereichs für die Auftrennung der Teilprofile und andererseits der Minimierung der Schnittfläche zur Auftrennung in die beiden Teilprofile.

Das erste und/oder das zweite Teilprofil können auch mehr als eine Kammer enthalten. Der Instrumententafelträger bzw. die Teilprofile können einen polygonalen, bsp. rechteckigen oder einen kreisförmigen Querschnitt aufweisen. Ferner können die Teilprofile auch eine Kombination von polygonalen und runden Querschnittsformen aufweisen. Der Instrumententafelträger bzw. die Teilprofile können bsp. als Kastenprofile ausgebildet sein.

Die Verbindungsstege sind im Bereich der separierten Teilprofile bevorzugt vollständig entfernt.

Das Abtrennen des zweiten Teilprofils vom ersten Teilprofil, bzw. das Abtrennen der Verbindungsstege wie auch das Biegen des zweiten Teilprofils geschieht bevorzugt mittels mechanischen Mitteln. Das Abtrennen kann bsp. mittels Sägen, Stanzen oder Schneiden, wie Wasserstrahl- oder Laserstrahlschneiden, erfolgen.

Der Instrumententafelträger ist bevorzugt ein Strangpressprofil aus einem Metall, insbesondere aus Aluminium oder einer Aluminiumlegierung.

Ein bevorzugtes Verfahren zur Herstellung des erfindungsgemässen Instrumententafelträgers zeichnet sich durch folgende Verfahrensschritte aus:
- Herstellen eines Instrumententafelträgerprofils mit einem ersten und zweiten Teilprofil mittels eines Strangpressverfahrens;
- Abtrennen des zweiten Teilprofils in Profillängsrichtung im Bereich des beifahrerseitigen Profilabschnitts;
- Wegbiegen des zweiten Teilprofils aus dem Richtungsverlauf des ersten Teilprofils.

Das zweite Teilprofil wird bevorzugt zum Fahrzeugboden hin, insbesondere zum Mitteltunnel hin, bezogen auf die spätere Position des Instrumententafelträgers im Fahrzeug, weggebogen.

Gemäss einer Weiterentwicklung der Erfindung lässt sich der Instrumententafelträger, gekennzeichnet durch ein Mehrkammerhohlprofil mit einem ersten und zweiten, jeweils wenigstens eine Profilkammer, insbesondere eine geschlossene Profilkammer, ausbildenden Teilprofil, welche über wenigstens einen, vorzugsweise zwei Verbindungsstege, zum genannten Instrumententafelträger verbunden sind, durch folgende Verfahrensschritte herstellen:
- Abtrennen des zweiten Teilprofils vom ersten Teilprofil im Bereich der Verbindungsstege entlang eines beifahrerseitigen Profilabschnitts;
- Wegbiegen des zweiten Teilprofils aus dem Richtungsverlauf des ersten Teilprofils.

Gegenstand der Erfindung ist ferner eine alternative Erfindungslösung, welche ausgeht von einem Instrumententafelträger, enthaltend ein an die beiden seitlichen Karosseriestrukturen angebundenes, zentrales Profil, eine zum Fahrzeugboden geführte Stützstrebe und ein fahrerseitig mit dem zentralen Profil verbundenes und mit diesem fluchtendes Verstärkungsprofil, wobei das Verstärkungsprofil zwecks Ausbildung der Stützstrebe beifahrerseitig aus dem Richtungsverlauf des zentralen Profils weggebogen ist

Die alternative Erfindungslösung zeichnet sich dadurch aus, dass das zentrale Profil und das Verstärkungsprofil im fahrerseitigen Profilabschnitt wenigstens zwei Berührungslinien ausbilden, entlang welchen die beiden Profile einander anliegen.

Das zentrale Profil ist bevorzugt durchgehend (einstückig) von der linken zur rechten Karosserieanbindung ausgebildet. Das zentrale Profil kann in Längsrichtung jedoch auch mehrteilig ausgebildet sein. Die beiden Profile sind bevorzugt entlang der zwei Berührungslinien miteinander verschweisst.

Die beiden einander anliegenden Profile können fahrerseitig eine Kontaktfläche ausbilden. In bevorzugter Ausführung weisen die beiden Profile im Fügebereich eine einander angepasste, also korrespondierende, Geometrie auf. Besonders bevorzugt bilden die Geometrien bzw. Teilgeometrien der beiden Profile zur Erhöhung der Steifigkeit des verstärkten Trägerprofils im Fügebereich einen Formschluss bzw. einen Teilformschluss aus. Eine formschlüssige Verbindung beansprucht ferner in der Regel weniger Bauraum.

Die Kontaktfläche kann eine ebene Fläche oder von gewölbter Gestalt sein. Ferner kann die Kontaktfläche auch zwei, drei oder mehrere, einen Winkel einschliessenden, ebenen Flächen umfassen. Die ebene Fläche oder die ebenen Flächen der Kontaktfläche können auch mit gewölbten Flächen kombiniert sein.

In Weiterentwicklung der Erfindung bildet eines der beiden Profile oder beide Profile zur Aufnahme, vorzugsweise zur formschlüssigen Aufnahme, des Gegenprofils nach aussen hin eine rinnen- oder kanalartige Struktur aus. Diese Struktur kann durch, bsp. radial vom Profil nach aussen geführte Flansche, auch Stege oder Fahnen genannt, ausgebildet sein.

Die genannten Flansche können im beifahrerseitigen Bereich des zentralen Profils bzw. im Bereich des Stützarmes, vollständig oder abschnittsweise entfernt bzw. abgetrennt sein. Das Abtrennen kann bsp. mittels Sägen, Stanzen oder Schneiden, wie Wasserstrahl- oder Laserstrahlschneiden, erfolgen.

Die rinnen- oder kanalartige Struktur im zentralen Profil oder im Verstärkungsprofil ist vorzugsweise so ausgebildet, dass das zentrale Profil fahrerseitig dem Verstärkungsprofil wenigstens teilweise, d.h. senkrecht oder schräg, aufliegt.

Die rinnenartige Struktur kann auch eine längslaufende Einbuchtung im zentralen Profil oder im Verstärkungsprofil sein, in welche eine Teilkontur des anderen Profils eingebettet ist.

Die Einbuchtung kann fallweise von oben genannten Flanschen bzw. Stegen flankiert sein. Ferner ist es auch möglich, dass das Gegenprofil zusätzlich zur Einbuchtung im anderen Profil im Fügebereich zwei, eine kanalartige Struktur ausbildende Flansche oder Stege der oben beschriebenen Art enthält.

Die Einbuchtung ist in Querschnittsansicht bevorzugt von konkaver, insbesondere von teilkreisförmiger, Gestalt. Die Form der Einbuchtung ist bevorzugt komplementär, d.h. gegengleich, zur darin eingebetteten Aussenkontur des Gegenprofils. Liegt die Einbuchtung im Zentralprofil, so ist diese bevorzugt bodenwärts gerichtet. Liegt die Einbuchtung im Verstärkungsprofil, so ist diese bevorzugt dachwärts gerichtet, so dass das zentrale Profil dem Verstärkungsprofil aufliegt und sich auf diesem abstützt. Eine im Zentralprofil vorgesehene Einbuchtung kann senkrecht oder schräg, d.h. entweder schräg in Richtung Fahrgastzelle oder schräg in Richtung Motorenraum, zum Boden gerichtet sein. Eine im Verstärkungsprofil vorgesehene Einbuchtung kann senkrecht oder schräg, d.h. entweder schräg in Richtung Fahrgastzelle oder schräg in Richtung Motorenraum, zum Dach gerichtet sein.

Das zweite Profil ist bevorzugt ein Rohrprofil, mit einem dem ersten Profil anliegenden Wandabschnitt von rundlicher Aussenkontur. Das Rohrprofil weist wenigstens abschnittsweise bevorzugt einen rundlichen, insbesondere einen kreisförmigen, Querschnitt auf. Das zweite Profil kann auch einen polygonalen Querschnitt aufweisen.

Das zweite Profil enthält an seinem freien Endabschnitt zum Fahrzeugboden hin Mittel, wie Ausnehmungen, zur Anbindung an die Fahrzeugstruktur. Das zweite Profil ist am genannten Endabschnitt bevorzugt zu einem (doppelwandigen) Flachprofil gequetscht. Ferner können zwecks Anbindung an die Fahrzeugstruktur am besagten Endabschnitt auch Profilwände entfernt sein.

Das zentrale Profil ist fahrerseitig mit dem Verstärkungsprofil über eine Kaltfügung, wie Schrauben oder Nieten, oder mittels Warmfügung, wie Schweissen oder Löten, verbunden. In bevorzugter Ausführung der Erfindung ist das zentrale Profil fahrerseitig entlang der beiden zugänglichen Berührungslinien mit dem Verstärkungsprofil durchgehend oder abschnittsweise längsverschweisst.

Die Profile können geklebt sein. Ferner können die Profile über Drittelemente bzw. Verbindungsmittel, wie Halterungen (z.B. Konsolenhalterung), Klemmen, Ringe, Bänder, miteinander verbunden sein. Es sind überdies auch Kombinationen der oben genannten Verbindungstechniken anwendbar.

Das zentrale Profil und das Verstärkungsprofil können mittels Strangpressen oder mittels Rollformen oder Abkanten eines Walzproduktes, insbesondere eines Bleches, hergestellt sein. Die Profile können bsp. gezogene Rohre oder längsverschweisste Rohre aus einem Walzprodukt, insbesondere Walzblech sein. Ferner können die Profile auch aus Halbschalen geschweisst sein. Das zentrale Profil ist bevorzugt ein Strangpressprofil.

Der Instrumententafelträger, bzw. die Profile oder Teilprofile, sind bevorzugt aus einem Metall, insbesondere aus Aluminium oder einer Aluminiumlegierung. Ferner können die Profile auch aus Stahl sein. Im weiteren können die Profile bzw. Teilprofile aus Kunststoff, insbesondere aus einem faserverstärkten Kunststoff, wie glasfaser- oder kohlenstofffaserverstärktem Kunststoff, sein. Ist das zentrale Profil unabhängig vom Verstärkungsprofil gefertigt, so können diese auch aus unterschiedlichen Werkstoffen sein.

An den Instrumententafelträger, bzw. die Profile bzw. Teilprofile, können Halteelemente zur Anbindung von Funktionselementen angebracht sein. Dies können unter anderem sein, ein Halteelement zur Festlegung der Lenksäule, Halteelemente zur Anbindung eines Beifahrer-Airbagsystems, eines Handschuhfaches, eines Knieschutzes oder Teilen einer Innenraumbelüftung und/oder Klimatisierung. Zwecks Anbindung von Funktionselementen oder Halterungen, bzw. zwecks Anbindung des Instrumententafelträgers an die Karosserie-Struktur, kann dieses, bzw. die Profile oder Teilprofile, insbesondere an ihren Endabschnitten, Ausnehmungen, wie Schlitze oder Lochungen, enthalten.

Die zur Anbindung des Verstärkungsprofils vorgesehenen Flansche (zweite Ausführungsvariante) bzw. Stege (erste Ausführungsvariante) am zentralen und/oder am Verstärkungsprofil können im beifahrerseitigen Profilabschnitt bzw. im Bereich des Stützarmes durchgehend oder abschnittsweise als Anbindungsflächen bzw. -stellen für Halterungen bzw. Verbindungselemente dienen.

Im zentralen Profil und/oder im Verstärkungsprofil/Stützstrebe können ferner zusätzliche Flansche in der Funktion als Anbindungsflächen bzw. -stellen für Halterungen vorgesehen sein. Die Flansche sind bei Strangpressprofilen mitextrudiert.

Die erfindungsgemässe Verbindung zwischen dem zentralen Profil und dem Verstärkungsprofil erlaubt einen optimalen Kraftübertrag zwischen den beiden Profilen, welcher bei der ersten Ausführungsvariante über die integrierte Profilstruktur und bei der zweiten Ausführungsvariante bsp. im wesentlichen über den Formschluss erfolgt.

Die Instrumententafelträgerstruktur findet bevorzugt Anwendung in Kraftfahrzeugen, wie Personenkraftwagen (PKW), Kastenwagen, Lieferwagen, Personentransporter, Vans und Kleinbusse.

Im folgenden wird die Erfindung beispielhaft und mit Bezug auf die beiliegenden Zeichnungen näher erläutert. Es zeigen:
- Fig. 1:: eine perspektivische Ansicht eines Instrumententafelträgers gemäss einer ersten Ausführungsform
- Fig. 2:: eine vergrösserte Ansicht des fahrerseitigen Instrumententafelträger-Querschnitts gemäss Fig. 1;
- Fig. 3, 4:: perspektivische Ansichten weiterer Instrumententafelquerschnitte;
- Fig. 5:: eine perspektivische Ansicht eines Instrumententafelträgers gemäss einer zweiten Ausführungsvariante;
- Fig. 6:: eine vergrösserte Ansicht des beifahrerseitigen Zentralprofil-Querschnitts gemäss Fig. 5;
- Fig. 7-11:: perspektivische Ansichten weiterer Querschnitte von Zentralprofilen.

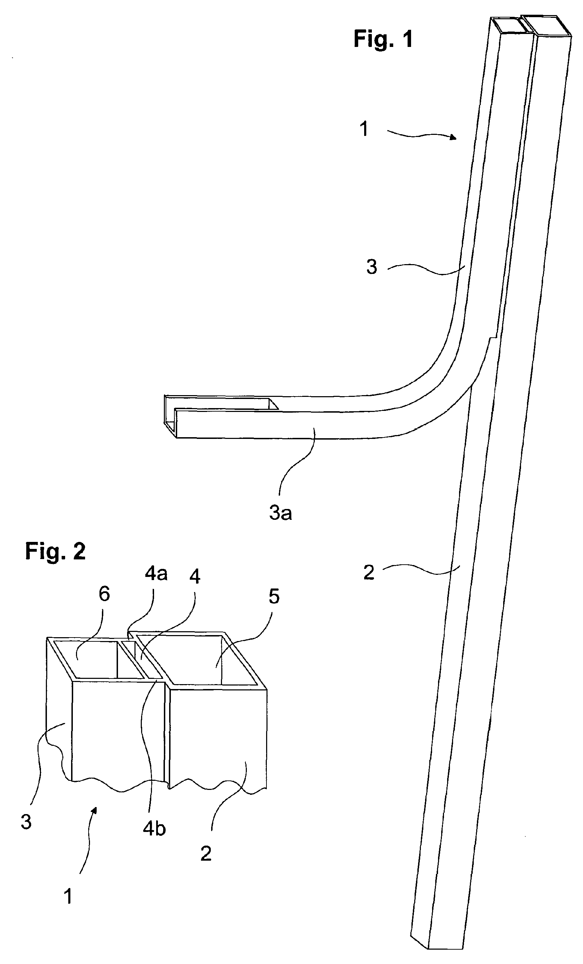

Eine erste Ausführungsvariante vorliegender Erfindung gemäss Fig. 1 und 2 zeigt einen Instrumententafelträger 1 aus einem Dreikammer-Strangpressprofil. Eine erste, durch vier Profilwände eingegrenzte Hohlkammer 5 eines Kastenteilprofils bildet ein Zentralprofil 2 (erstes Teilprofil) aus, welches sich im Fahrzeug von der fahrerseitigen zur beifahrerseitigen Karrosserie-Anbindung (A-Säule) erstreckt. Eine zweite, durch vier Profilwände eingegrenzte Hohlkammer 6 eines Kastenteilprofils bildet das Verstärkungsprofil 3 (zweites Teilprofil) im fahrerseitigen Instrumententafelträgerabschnitt aus. Eine dritte Profilkammer 4 wird durch je eine Profilwand des Zentralprofils 2 und des Verstärkungsprofils 3 sowie zwei voneinander beabstandete Verbindungsstege 4a, 4b gebildet. Der Instrumententafelträger 1 ist im beifahrerseitigen Profilabschnitt im Bereich der dritten Profilkammer 4 in Längsrichtung aufgetrennt. Das Verstärkungsprofil 3 ist unter Ausbildung eines Stützarmes 3a aus der Längsrichtung des Zentralprofils 2 weggebogen. Der Stützarm 3a geht im fahrerseitigen Instrumententafelträgerabschnitt in das, integral mit dem Zentralprofil 2 verbundene Verstärkungsprofil 3 über.

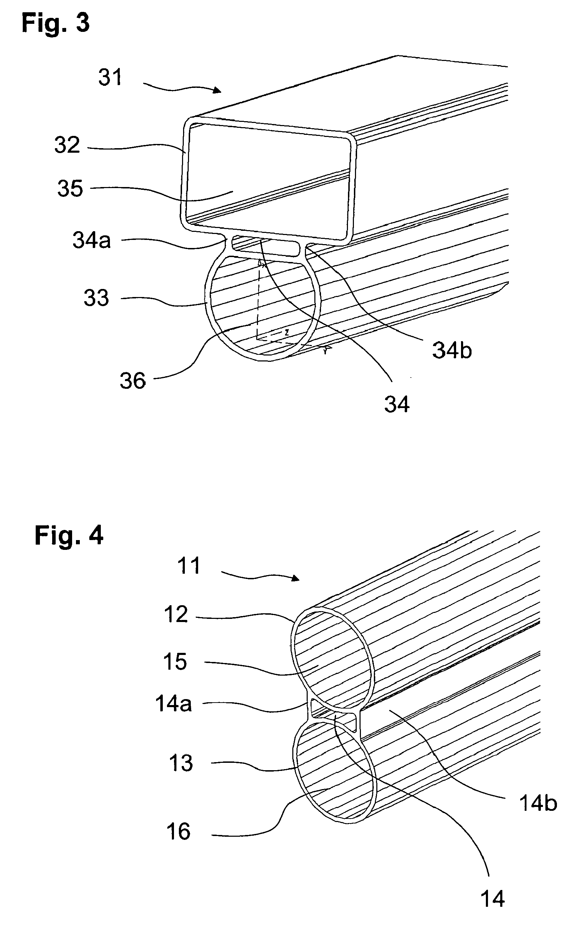

Die Fig. 3 und 4 zeigen weitere Ausführungsformen von erfindungsgemässen Instrumententafelträger. Die Ausführungsform gemäss Fig. 3 zeigt einen Instrumententafelträger 31 aus einem Dreikammer-Strangpressprofil. Eine erste, durch vier Profilwände eingegrenzte Hohlkammer 35 eines Kastenteilprofils bildet ein Zentralprofil 32 (erstes Teilprofil) aus, welches sich im Fahrzeug von der fahrerseitigen zur beifahrerseitigen Karrosserie-Anbindung (A-Säule) erstreckt. Eine zweite Hohlkammer 36 eines einseitig zu einer Ebene abgeflachten Rohrteilprofils bildet das Verstärkungsprofil 33 (zweites Teilprofil) im fahrerseitigen Instrumententafelträgerabschnitt aus. Eine dritte Profilkammer 34 wird durch je eine Profilwand des Zentralprofils 32 und des Verstärkungsprofils 33 (abgeflachte Profilwand) sowie zwei voneinander beabstandete Verbindungsstege 34a, 34b gebildet. Das Rohrteilprofil kann auch vollumfänglich rund ausgestaltet sein. Der Instrumententafelträger 31 ist im beifahrerseitigen Profilabschnitt im Bereich der dritten Profilkammer 34 in Längsrichtung analog zu Fig. 1 aufgetrennt (nicht gezeigt). Das Verstärkungsprofil 33 ist unter Ausbildung eines Stützarmes aus der Längsrichtung des Zentralprofils 32 weggebogen. Der Stützarm geht im fahrerseitigen Instrumententafelträgerabschnitt in das, integral mit dem Zentralprofil 32 verbundene Verstärkungsprofil 33 über (vgl. dazu auch Fig. 1).

Die in Fig. 3 angezeigte X-Richtung zeigt dachwärts, die Y-Richtung in Fahrzeuglängsrichtung und die Z-Richtung quer zur Fahrzeuglängsrichtung.

Die Ausführungsform gemäss Fig. 4 zeigt einen Instrumententafelträger 11 aus einem Dreikammer-Strangpressprofil. Eine erste durch eine Profilwand eingegrenzte Hohlkammer 15 eines Rohrteilprofils bildet ein Zentralprofil 12 (erstes Teilprofil) aus, welches sich im Fahrzeug von der fahrerseitigen zur beifahrerseitigen Karrosserie-Anbindung (A-Säule) erstreckt. Eine zweite Hohlkammer 16 eines zweiten Rohrteilprofils bildet das Verstärkungsprofil 13 (zweites Teilprofil) im fahrerseitigen Instrumententafelträgerabschnitt aus. Eine dritte Profilkammer 14 wird durch je eine Profilwand des Zentralprofils 12 und des Verstärkungsprofils 13 sowie zwei voneinander beabstandete Verbindungsstege 14a, 14b gebildet. Die Rohrteilprofile können zur dritten Profilkammer 14 hin zu einer Ebene abgeflacht sein (vgl. Fig. 3). Der Instrumententafelträger 11 ist im beifahrerseitigen Profilabschnitt im Bereich der dritten Profilkammer 14 in Längsrichtung analog zu Fig. 1 aufgetrennt (nicht gezeigt). Das Verstärkungsprofil 13 ist unter Ausbildung eines Stützarmes aus der Längsrichtung des Zentralprofils 12 weggebogen. Der Stützarm geht im fahrerseitigen Instrumententafelträgerabschnitt in das, integral mit dem Zentralprofil 12 verbundene Verstärkungsprofil 13 über (vgl. dazu auch Fig. 1).

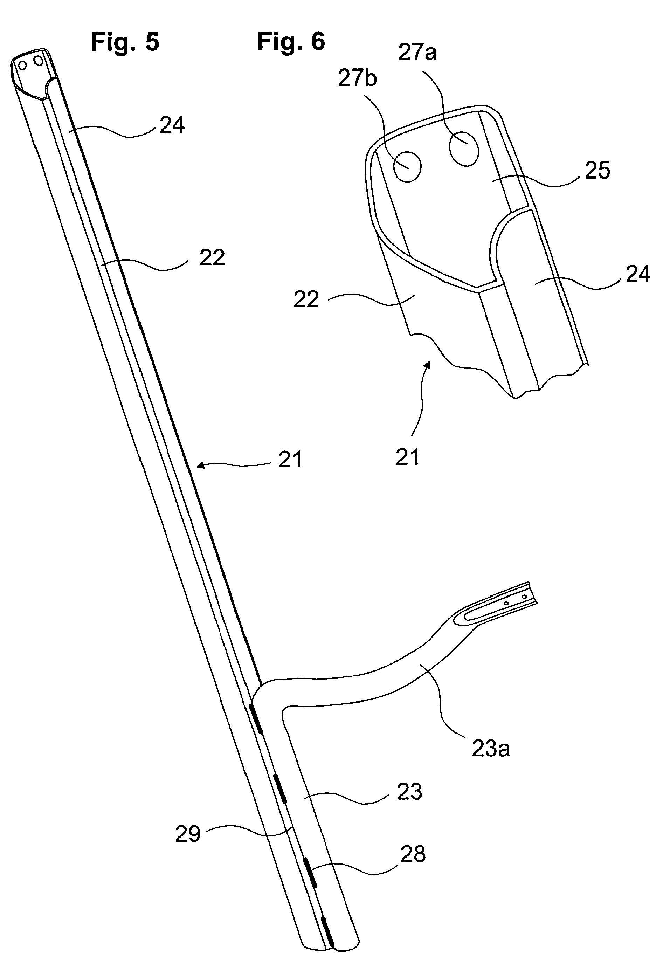

Eine zweite Ausführungsvariante vorliegender Erfindung gemäss Fig. 5 und 6 zeigt einen Instrumententafelträger 21 aus einem Zentralprofil 22 sowie einem Verstärkungsprofil 23. Das Zentralprofil 22 ist als Einkammerhohlprofil ausgebildet und erstreckt sich von der fahrerseitigen zur beifahrerseitigen Karrosserie-Anbindung (A-Säule). Das Verstärkungsprofil 23 ist ebenfalls als Einkammerhohlprofil ausgebildet und erstreckt lediglich über den fahrerseitigen Instrumententafelträgerabschnitt. Das Verstärkungsprofil 23 ist in Richtung Beifahrerseite unter Ausbildung eines Stützarmes 23a aus der Längsrichtung des Intrumententafelträgers 21 weggebogen.

Das Zentralprofil 22 weist eine querschnittlich konkave Einbuchtung 24 auf, in welche das Verstärkungsprofil 23 eingebettet ist. Die konkave Einbuchtung 24 ist hierzu gegengleich zur Aussenkontur des Verstärkungsprofils 23 ausgestaltet, so dass das Verstärkungsprofil 23 mit seiner Aussenkontur formschlüssig der Wandung der Einbuchtung 24 anliegt.

Das Verstärkungsprofil 23 ist entlang der frei liegenden Berührungslinien 29 unter Ausbildung von Längsschweissnähten 28 mit dem Zentralprofil 22 verschweisst.

Das Zentralprofil 22 weist an seinen Endabschnitten Bohrungen 27a, 27b auf, über welche die Anbindung zur seitlichen Karosseriestruktur erfolgt. Der Stützarm 23a ist an seinem bodenwärtigen Endabschnitt zu einem doppelwandigen Flachprofil gequetscht und enthält ebenfalls Bohrungen zur Anbindung an eine Fahrzeugbodenstruktur.

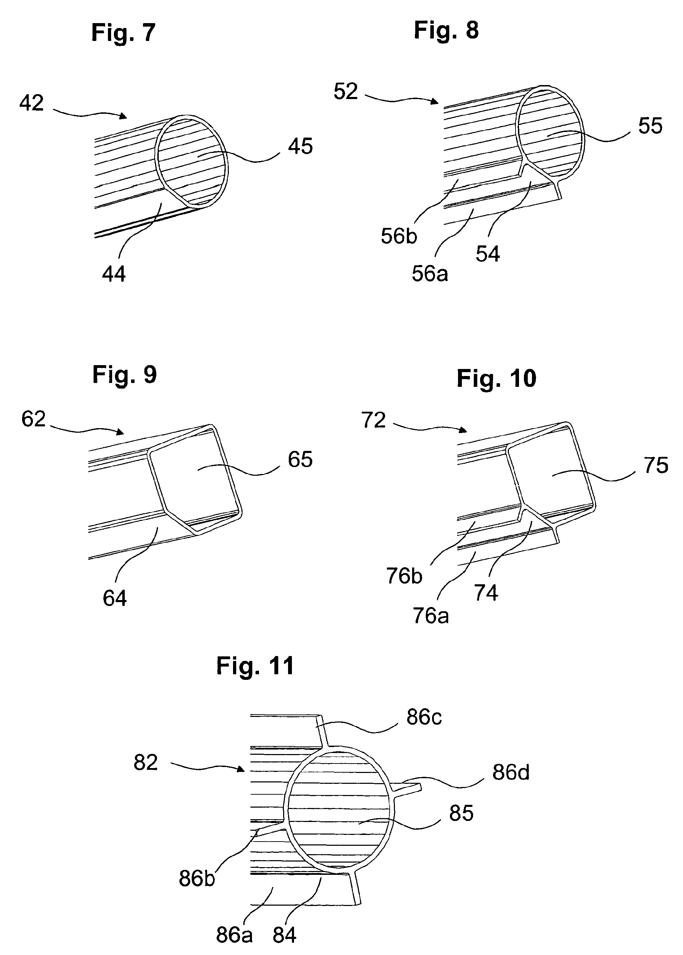

Fig. 7 bis 11 zeigen weitere Ausführungsformen von Zentralprofilen, geeignet zur Anbindung eines Verstärkungsprofils.

Das Zentralprofil 42 gemäss Fig. 7 besteht aus einem einseitig zu einer Ebene abgeflachten Rohrprofil mit einer Hohlkammer 45. Die Abflachung 44 dient der Anbindung eines Verstärkungsprofils, welches vorzugsweise ebenfalls eine ebene Anbindungsfläche aufweist.

Das Zentralprofil 52 gemäss Fig. 8 besteht aus einem einseitig abgeflachten Rohrprofil mit einer Hohlkammer 55. Die zu einer Ebene abgeflachte Profilfläche ist durch einen ersten und zweiten Flansch 56a, 56b begrenzt, welche eine Art Kanal 54 ausbilden. Dieser dient der Anbindung eines Verstärkungsprofils, wobei die Flansche der besseren Schweissbarkeit und dem Toleranzausgleich dienen. Sind die Profile über eine Schweissverbindung gefügt, so geschieht dies entlang der Flansche.

Das Zentralprofil 62 gemäss Fig. 9 besteht aus einem rechteckigen Kastenprofil mit einer Hohlkammer 65. Ein bodenwärtiger Eckbereich ist unter Ausbildung einer ebenen Schrägfläche 64 abgeschrägt. Die Schrägfläche 64 dient der Anbindung eines Verstärkungsprofils, welches vorzugsweise ebenfalls eine ebene Anbindungsfläche aufweist.

Das Zentralprofil 72 gemäss Fig. 10 besteht aus einem rechteckigen Kastenprofil mit einer Hohlkammer 75. Ein bodenwärtiger Eckbereich ist unter Ausbildung einer ebenen Schrägfläche abgeschrägt Die Schrägfläche ist durch einen ersten und zweiten Flansch 76a, 76b begrenzt, welche eine Art Kanal 74 ausbilden. Dieser dient der Anbindung eines Verstärkungsprofils, wobei die Flansche der besseren Schweissbarkeit und dem Toleranzausgleich dienen. Sind die Profile über eine Schweissverbindung gefügt, so geschieht dies entlang der Flansche.

Das Zentralprofil 82 gemäss Fig. 11 besteht aus einem Rohrprofil mit einer Hohlkammer 85. Das Rohrprofil enthält vier radial von der Profilwand nach aussen führende Flansch 86a, 86b, 86c, 86d, welche jeweils eine Art Kanal einschliessen. Ein bodenwärtiger bzw. seitlich nach unten gerichteter Kanal 84 dient der Anbindung eines Verstärkungsprofils, wobei die beiden Flansche 86a, 86b der besseren Schweissbarkeit und dem Toleranzausgleich dienen. Sind die Profile über eine Schweissverbindung gefügt, so geschieht dies entlang der Flansche.

## Patentansprüche

1. Instrumententafelträger (1) eines Kraftfahrzeuges, enthaltend ein an die beiden seitlichen Karosseriestrukturen angebundenes, zentrales Profil, eine zum Fahrzeugboden geführte Stützstrebe und eine fahrerseitige Verstärkungsstruktur,
**dadurch gekennzeichnet, dass**
der Instrumententafelträger (1) ein Strangpresshohlprofil mit einem ersten (2) und zweiten (3) Teilprofil enthält, und das erste Teilprofil (2) dem zentralen Profil und das zweite Teilprofil (3) der Verstärkungsstruktur entspricht, und das zweite Teilprofil (3) zwecks Ausbildung einer Stützstrebe (3a), beifahrerseitig in Profillängsrichtung vom ersten Teilprofil (2) abgetrennt und aus dem Richtungsverlauf des ersten Teilprofils (2) weggebogen ist.

2. Instrumententafelträger nach Anspruch 1, wobei das zentrale Profil (2) durchgehend ausgebildet ist.

3. Instrumententafelträger nach einem der Ansprüche 1 bis 2, wobei der Instrumententafelträger (1) fahrerseitig wenigstens zwei Profilkammern (5, 6), insbesondere geschlossene Profilkammern aufweist.

4. Instrumententafelträger nach einem der Ansprüche 1 bis 3, wobei das erste und zweite Teilprofil (2, 3) jeweils wenigstens eine Profilkammer (5, 6), insbesondere eine geschlossene Profilkammer enthalten.

5. Instrumententafelträger nach einem der Ansprüche 1 bis 4, wobei das die Stützstrebe (3a) ausbildende zweite Teilprofil (3) zu einem Mitteltunnel geführt und an diesen angebunden ist.

6. Instrumententafelträger nach einem der Ansprüche 1 bis 5, wobei der Instrumententafelträger (1) ein erstes (2) und zweites (3) Teilprofil mit jeweils wenigstens einer Profilkammer (5, 6), insbesondere einer geschlossene Profilkammer, enthält, und die Teilprofile (2, 3) fahrerseitig über wenigstens einen, vorzugsweise zwei Verbindungsstege (4a, 4b) verbunden sind, und das zweite Teilprofil (3) im beifahrerseitigen Profilabschnitt im Bereich der Verbindungsstege (4a, 4b) in Profillängsrichtung vom ersten Teilprofil (2) abgetrennt und unter Ausbildung der Stützstrebe (3a) aus dem Richtungsverlauf des ersten Teilprofils (2) weggebogen ist.

7. Instrumententafelträger nach Anspruch 6, wobei das erste und zweite Teilprofil (2, 3) fahrerseitig über wenigstens zwei Verbindungsstege (4a, 4b) verbunden sind und das erste und zweite Teilprofil (2, 3) zusammen mit den Verbindungsstegen (4a, 4b) wenigstens eine weitere Profilkammer (4) einschliessen.

8. Instrumententafelträger nach einem der Ansprüche 6 bis 7, wobei die Verbindungsstege (4a, 4b) im Bereich der separierten Teilprofile vollständig entfernt sind.

9. Verfahren zur Herstellung eines Instrumententafelträgers nach einem der Ansprüche 1 bis 8,
**gekennzeichnet durch** folgende Schritte:
- Herstellen eines Mehrkammerhohlprofils mit einem ersten und zweiten Teilprofil (2, 3) mittels Strangpressen;
- Abtrennen des zweiten Teilprofils (3) in Profillängsrichtung im Bereich des beifahrerseitigen Profilabschnitts;
- Wegbiegen des zweiten Teilprofils (3) aus dem Richtungsverlauf des ersten Profils (2).

10. Verfahren nach Anspruch 9, wobei das zweite Teilprofil (3) zum Fahrzeugboden hin, insbesondere zum Mitteltunnel hin weggebogen wird.

11. Verfahren nach einem der Ansprüche 9 bis 10, wobei der Instrumententafelträger (1) ein erstes (2) und ein zweites (3), jeweils wenigstens eine Profilkammer (5, 6), insbesondere eine geschlossene Profilkammer, ausbildendes Teilprofil enthält, welche über wenigstens einen, vorzugsweise zwei Verbindungsstege (4a, 4b) verbunden sind, **gekennzeichnet durch** folgende Schritte:
- Abtrennen des zweiten Teilprofils (3) vom ersten Teilprofil (2) im Bereich der Verbindungsstege (4a, 4b) in Profillängsrichtung entlang eines beifahrerseitigen Profilabschnitts;
- Wegbiegen des zweiten Teilprofils (3) aus dem Richtungsverlauf des ersten Teilprofils (2).

12. Instrumententafelträger (21) eines Kraftfahrzeuges, enthaltend ein an die beiden seitlichen Karosseriestrukturen angebundenes, zentrales Profil (22), eine zum Fahrzeugboden geführte Stützstrebe (23a) und ein fahrerseitig mit dem zentralen Profil (22) verbundenes und mit diesem fluchtendes Verstärkungsprofil (23), wobei das Verstärkungsprofil (23) zwecks Ausbildung der Stützstrebe (23a) beifahrerseitig aus dem Richtungsverlauf des zentralen Profils (22) weggebogen ist,
**dadurch gekennzeichnet, dass**
das zentrale Profil (22) und das Verstärkungsprofil (23) im fahrerseitigen Profilabschnitt wenigstens zwei Berührungslinien (29) ausbilden, entlang welchen die beiden Profile (22, 23) einander anliegen.

13. Instrumententafelträger nach Anspruch 12, wobei das zentrale Profil (22) durchgehend ausgebildet ist.

14. Instrumententafelträger nach einem der Ansprüche 12 bis 13, wobei die beiden Profile entlang der zwei Berührungslinien miteinander verschweisst sind.

15. Instrumententafelträger nach einem der Ansprüche 12 bis 14, wobei die beiden einander fahrerseitig anliegenden Profile (22, 23) eine Kontaktfläche ausbilden.

16. Instrumententafelträger nach einem der Ansprüche 12 bis 15, wobei die beiden Profile (22, 23) im Fügebereich einen Formschluss ausbilden.

17. Instrumententafelträger nach einem der Ansprüche 12 bis 16, wobei eines der beiden Profile (22) im Fügebereich zur Aufnahme des anderen Profils eine aussenseitige, rinnen- oder kanalartige Struktur (24) ausbildet.

18. Instrumententafelträger nach einem der Ansprüche 12 bis 17, wobei die rinnen- oder kanalartige Struktur (54) durch, vorzugsweise radial, vom Profil (52) nach aussen geführte Flansche (56a, 56b) und/oder durch eine Einbuchtung (24) im Profil (22) ausgebildet wird.

19. Instrumententafelträger nach einem der Ansprüche 12 bis 18, wobei das eine Profil, vorzugsweise das zentrale Profil (22), wenigstens im fahrerseitigen Profilabschnitt eine längslaufende Einbuchtung (24) aufweist, in welche eine Teilkontur des anderen Profils, insbesondere des Verstärkungsprofils (23) eingebettet ist.

20. Instrumententafelträger nach Anspruch 19, wobei die Einbuchtung (24) in Querschnittsansicht von konkaver, insbesondere von teilkreisförmiger, Gestalt ist.

21. Instrumententafelträger nach einem der Ansprüche 12 bis 20, wobei das Verstärkungsprofil (23) ein Rohrprofil, mit einem dem zentralen Profil (22) anliegenden Wandabschnitt von rundlicher Aussenkontur ist.

22. Instrumententafelträger nach einem der Ansprüche 12 bis 21, wobei die Form der Einbuchtung (24) komplementär zur darin eingebetteten Aussenkontur des Verstärkungsprofils (23) ist.

23. Instrumententafelträger nach einem der Ansprüche 12 bis 22, wobei das zentrale Profil (22) mit dem Verstärkungsprofil (23) fahrerseitig entlang ihrer beiden zugänglichen Berührungslinien (29) durchgehend oder abschnittsweise längsverschweisst ist.
